# EUROPEAN PATENT SPECIFICATION

(11) **EP 3 626 603 B1**
(45) Date of publication and mention of the grant of the patent: **29.09.2021**
(21) Application number: 19184923.1
(22) Date of filing: 08.07.2019
(51) Int. Cl.: B64C 3/18, B64C 3/20, B64C 27/473, B29D 99/00

(54) **COMPOSITE FABRIC WING SPAR WITH INTERLEAVED TAPE CAP PLIES**
VERBUNDSTOFFFLÜGELHOLM MIT INEINANDERGREIFENDEN BANDDECKLAGEN
LONGERON D'AILE EN TISSU COMPOSITE COMPORTANT DES NAPPES DE SOMMET À BANDE ENTRELACÉE

(30) Priority: 18.09.2018 US 201816134570
(43) Date of publication of application: 25.03.2020
(73) Proprietor: The Boeing Company, Chicago, IL 60606-1596 (US)
(72) Inventor: Behzadpour, Forouzan, Chicago, 60606-1596 (US); Stickler, Patrick B., Chicago, 60606-1596 (US)
(74) Representative: Witte, Weller & Partner Patentanwälte mbB

(56) References cited:
- EP-A1- 1 547 756
- EP-A1- 2 535 169
- EP-A1- 2 639 051
- US-A1- 2016 208 616

## Description

### FIELD

This disclosure pertains to an aircraft wing construction of composite materials. In particular, this disclosure pertains to a wing spar having a web constructed of only pre-preg fabric and having first and second spar caps projecting at an angle from opposite edges of the web with the first and second spar caps being constructed of interleaved portions of the pre-preg fabric of the web and unidirectional pre-preg tapes.

### BACKGROUND

Document US 2016/208616 A1, according to its abstract, states that a composite spar having an upper and edge regions is provided including a plurality of first laminates and a plurality of second laminates. The plurality of first laminates includes one or more intermediate modulus graphite plies having an intermediate modulus. The plurality of first laminates is arranged in one or more intermediate modulus layers to form at least a portion of the upper wall region, lower wall region, leading edge region and trailing edge region. The plurality of second laminates includes one or more high modulus graphite plies having a high modulus. The plurality of second laminates is arranged in one or more high modulus layers. The high modulus layers are generally interposed between intermediate modulus layers.

Document EP 2 535 169 A1, according to its abstract, states a method for producing a structural member and the structural member, in which the structural member including a composite material can efficiently be produced such that strength of the structural member is sufficiently ensured while generation of a wrinkle in a composite material sheet is prevented even in a three-dimensionally curved portion of the structural member. A narrow prepreg sheet 20N is bonded along a ridge C, and wide prepreg sheet 20W is bonded to other portions, whereby the wide prepreg sheet 20W having no cut line is bonded to both side portions of the ridge C. In a portion in which a spar 10 is curved, the narrow prepreg sheet 20N is bonded in an axial direction of the spar 10 while divided into plural pieces, and a length of the narrow prepreg sheet 20N is adjusted according to a radius of curvature of the curved portion in the axial direction of the spar 10, whereby various radii of curvature are easily dealt with.

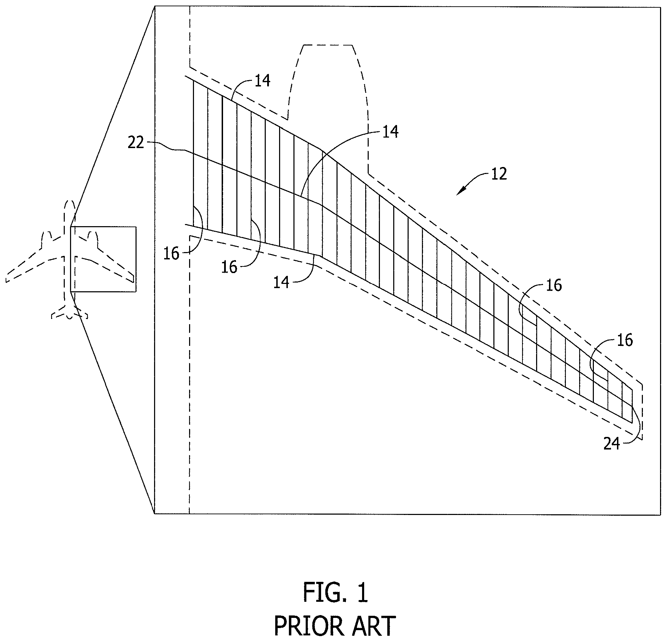

Figure 1 is a schematic representation of a typical construction of the interior structure of an aircraft wing 12. The interior structure of the wing 12 basically consists of a framework of spars 14 and ribs 16 that are contained inside the exterior skin 18 of the wing, represented by dashed lines in Figure 1. In the current construction of aircraft, the spars 14 and ribs 16 are constructed of composite materials.

The spars 14 run the length of the wing from a fuselage end or root end 22 of the wing 12 to a tip end 24 of the wing. The spars 14 provide the wing 12 with most of its strength.

The spars 14 are often constructed of pre-preg composite material tapes. The construction of the spars 14 is often an automated process, with a machine quickly laying up pluralities of the pre-preg composite material tapes on the surface of a layup tool or cure tool.

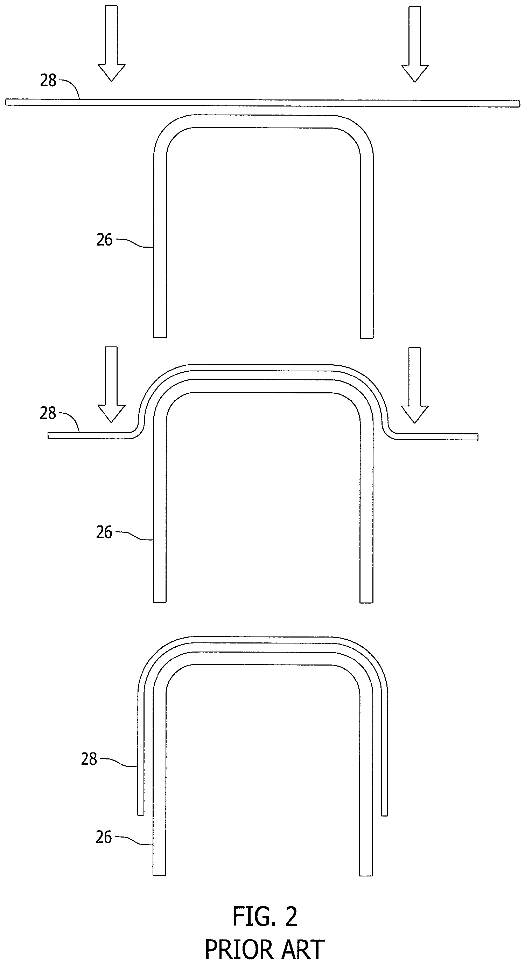

Figure 2 is a schematic representation of a cross-section view of a typical layup tool or cure tool 26. The tool 26 has dimensions that basically correspond to the dimensions of the spar 14 to be constructed on the tool. Although only cross-section dimensions of the tool 26 are represented in Figure 2, it should be understood that the tool 26 will have a length dimension that corresponds to the length dimension of the spar 14 to be constructed on the tool.

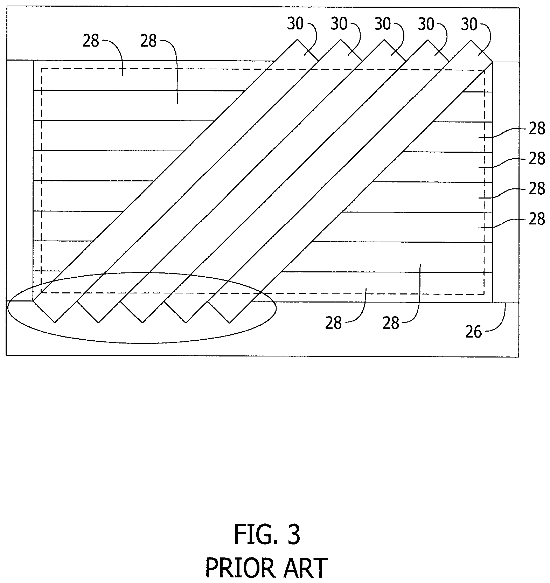

Figure 3 is a representation of the manner in which pre-preg tapes or pre-preg strips are laid up on the surface of the layup tool or cure tool 26 by an Automated Fiber Placement (AFP) machine. The spar 14 is constructed on the tool 26 with layers or plies of pre-preg tapes 28 laid down at a 0° angle, side by side, along the length of the tool 26, thereby forming a full lengthwise layer of composite material along the full length of the spar 14. The AFP machine also lays down additional layers of pre-preg tapes 30, side by side, at -45° on top of the pre-preg tapes 28 oriented at 0°, as represented in Figure 3. Although not represented in Figure 3, the AFP machine will also lay down additional layers of pre-preg tapes, side by side, at +45° orientations and at 90° orientations relative to the length of the tool 26. Several layers of plies of pre-preg tapes could be laid up on the tool 26 in constructing the spar 14.

Composite aircraft wing spars constructed in the manner described above are prone to wrinkles forming in the layers of pre-preg tapes laid up on the layup tool or cure tool 26. This is due to the length of the tool 26 having changes in geometry along the length of the tool that are associated with the changes in the geometry of the spar 14 being formed on the tool. In a typical construction of a wing spar 14, the spar 14 width dimension tapers and becomes narrower as it extends from the fuselage end or root end 22 of the spar to the tip end 24 of the spar. Furthermore, the spar 14 height dimension typically tapers and becomes smaller as the spar 14 extends from the fuselage end 22 of the spar to the tip end 24 of the spar. Still further, the spar 14 could have a curvature or one or more angled sections as the spar 14 extends from the fuselage end 22 to the tip end 24 of the spar. These changes in the geometry of the spar 14 along the length of the spar often cause wrinkles to form between the layers or plies of pre-preg tapes that make up the spar construction. Wrinkles formed between the layers of pre-preg tapes of the spar 14 can result in a significant strength reduction and stiffness reduction to the spar 14. Currently, the solutions employed to overcome strength reductions and stiffness reductions in the constructions of spars 14 produced by wrinkles require significant time and are costly.

### SUMMARY

The aircraft wing construction and in particular the aircraft wing spar construction of this disclosure substantially eliminates the formation of wrinkles as composite material plies or composite material layers are laid up on a layup tool or cure tool in constructing the aircraft wing spar of this disclosure.

The spar of this disclosure has a length dimension that extends between a fuselage end or a root end of the spar and an opposite tip end of the spar. The spar has a C-channel cross-section configuration along its length dimension.

The C-channel cross-section configuration of the spar gives the spar a web at a central portion of the spar. The web has a height dimension between a top edge or top margin of the web and an opposite bottom edge or bottom margin of the web. The web has a length dimension between the fuselage end of the spar and the opposite tip end of the spar. The web also has a thickness dimension between a first side surface of the web and an opposite second side surface of the web.

The C-channel cross-section configuration of the spar also gives the spar a first spar cap on the top edge of the web. The first spar cap has a length dimension that extends along the top edge of the web between the fuselage end of the spar and the tip end of the spar. The first spar cap also has a width dimension that projects from the top edge of the web, and a thickness dimension between a top surface of the first spar cap and an opposite bottom surface of the first spar cap.

The C-channel cross-section configuration of the spar also gives the spar a second spar cap on the bottom edge of the web. The second spar cap has a length dimension that extends along the bottom edge of the web between the fuselage end of the spar and the tip end of the spar. The second spar cap also has a width dimension that projects from the bottom edge of the web, and a thickness dimension between a top surface of the second spar cap and an opposite bottom surface of the second spar cap.

The web of the spar is constructed of layers or plies of pre-preg fabric. The web is constructed of only pre-preg fabric.

The first spar cap is constructed of portions of the pre-preg fabric of the web and first pre-preg tapes. The first pre-preg tapes are unidirectional tapes with composite fibers oriented along the length dimension of the spar. The portions of the pre-preg fabric of the web and the first pre-preg tapes that make up the first spar cap are interleaved with the portions of the pre-preg fabric of the web and the first pre-preg tapes being arranged in alternating layers.

The portions of the pre-preg fabric of the web that make up the first spar cap extend through a bend as the portions of the pre-preg fabric extend from the web to the first spar cap. The bend orients the first spar cap at an angle relative to the web. The first pre-preg tapes that make up the first spar cap are spaced from the bend at a distance of at least 6.35 mm (0.25 inches) away from the bend.

The second spar cap is constructed of portions of the pre-preg fabric of the web and second pre-preg tapes. The second pre-preg tapes are unidirectional tapes with composite fibers oriented along the length dimension of the spar. The portions of the pre-preg fabric of the web and the second pre-preg tapes that make up the second spar cap are interleaved with the portions of the pre-preg fabric of the web and the second pre-preg tapes being arranged in alternating layers.

The portions of the pre-preg fabric of the web that make up the second spar cap extend through a bend as the portions of the pre-preg fabric extend from the web to the second spar cap. The bend orients the second spar cap at an angle relative to the web. The second pre-preg tapes that make up the second spar cap are spaced from the bend at a distance of at least 6.35 mm (0.25 inches) away from the bend.

The construction of the spar of this disclosure eliminates pre-preg tapes from the web and the bends at the top and bottom edges of the web that connect the web with the first and second spar caps, respectively. This eliminates pre-preg tapes from the areas of the spar where wrinkles in the tapes would form. The pre-preg fabric of the spar is more easily formed over the complex surfaces of the web and the bends at the top and bottom edges of the web without wrinkling. The unidirectional pre-preg tapes interleaved with the portions of the pre-preg fabric in the first spar cap and the second spar cap improve the stiffness of the spar in the span wise or along the length dimension of the spar, leading to a more structurally efficient design. The spar webs, constructed of 100% pre-preg fabric resist shear loading. The spar caps, constructed as a hybrid of pre-preg fabric and pre-preg tape resist bending loads.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

Figure 1 is a schematic representation of the interior structure of a prior art aircraft wing comprising a framework of spars and ribs.
Figure 2 is a schematic representation of a prior art process of laying up pre-preg tapes on a layup tool or cure tool.
Figure 3 is a schematic representation of a prior art process of laying up pre-preg tapes in overlapping layers or plies in constructing a prior art aircraft wing spar.
Figure 4 is a schematic representation of an aircraft wing construction comprising the aircraft wing spar of this disclosure.
Figure 5 is a schematic representation of a cross-section of the aircraft wing spar of this disclosure represented in Figure 4.

### DETAILED DESCRIPTION

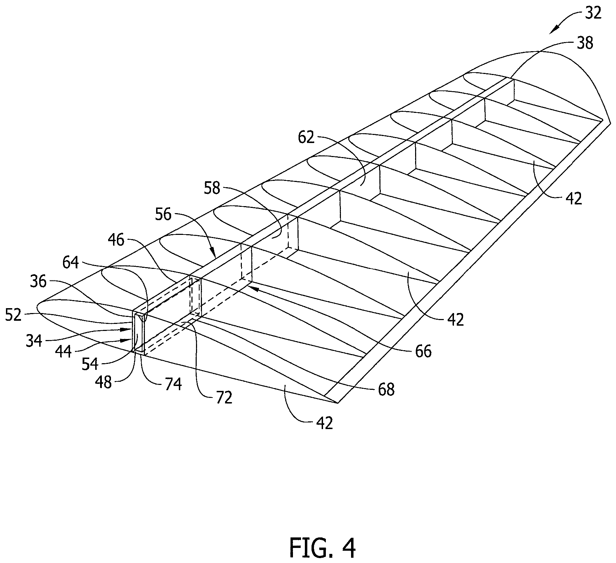

Figure 4 is a schematic representation of a perspective view of the interior structure of an aircraft wing construction 32 employing the aircraft wing spar 34 of this disclosure. Although only one aircraft wing spar 34 is represented in Figure 4, it should be understood that an aircraft wing could be constructed employing multiple aircraft wing spars 34 of the type to be described herein.

As represented in Figure 4, the aircraft wing spar 34 extends through the length of the interior of the aircraft wing 32 between a fuselage end or root end 36 of the spar 34 and a tip end 38 of the spar. As the spar 34 extends through the interior of the wing 32, it intersects with a plurality of rib structures 42 in the interior of the wing, as is conventional. As will be described in more detail herein, the aircraft wing spar 34 is constructed entirely of composite materials.

The spar 34 has a length dimension that extends between the fuselage end 36 of the spar and the opposite tip end 38 of the spar. The spar 34 has a C-channel cross-section configuration along its entire length dimension. The construction of the spar 34 to be described herein could be employed in spars having other cross-section configurations.

The C-channel cross-section configuration of the spar 34 gives the spar a web 44 at a central portion of the spar. The web 44 has an elongate, rectangular configuration with a height dimension between a top edge or top margin 46 of the web 44 and an opposite bottom edge or bottom margin 48 of the web. The web 44 could have other elongate configurations other than the rectangular configuration represented in Figure 4. For example, the web 44 could have an elongate, tapered configuration as the web extends from the fuselage end 36 of the web to the tip end 38 of the web. The web 44 has a length dimension between the fuselage end 36 of the spar 34, which forms the fuselage end 36 of the web 44, and the opposite tip end 38 of the spar 34, which forms the tip end 38 of the web 44. The web 44 also has a thickness dimension between a first side surface 52 of the web and an opposite second side surface 54 of the web.

The C-channel cross-section configuration of the spar 34 also gives the spar a first spar cap 56 on the top edge 46 of the web 44. The first spar cap 56 represented in Figure 4 has an elongate, rectangular configuration. The first spar cap 56 could have other, equivalent configurations. For example, the first spar cap 56 could have a tapered configuration as the first spar cap 56 extends from the fuselage end 36 of the spar 34 to the tip end 38 of the spar. The first spar cap 56 has a length dimension that extends along the top edge 46 of the web 44 between the fuselage end 36 of the spar 34, which forms the fuselage end 36 of the first spar cap 56, to the tip end 38 of the spar 34, which forms the tip end 38 of the first spar cap 56. The first spar cap 56 also has a width dimension that projects from and extends from the top edge 46 of the web 44 to a rear edge 58 of the first spar cap 56. As represented in Figure 4, the width dimension of the first spar cap 56 extends from the top edge 46 of the web 44 at a right angle relative to the web 44. The width dimension of the first spar cap 56 could extend from the top edge 46 of the web 44 at other angular orientations. The first spar cap 56 also has a thickness dimension between a top surface 62 of the first spar cap and an opposite bottom surface 64 of the first spar cap.

The C-channel cross-section configuration of the spar 34 also gives the spar a second spar cap 66 on the bottom edge 48 of the web 44. The second spar cap 66 has an elongate, rectangular configuration that extends from the fuselage end 36 of the spar 34 to the tip end 38 of the spar. The second spar cap 66 could have other, equivalent configurations. For example, the second spar cap 66 could have a tapered configuration as it extends from the fuselage end 36 of the spar 34 to the tip end 38 of the spar. The second spar cap 66 has a length dimension that extends along the bottom edge 48 of the web 44 between the fuselage end 36 of the spar 34, which forms the fuselage end 36 of the second spar cap 66, to the tip end 38 of the spar 34, which forms the tip end 38 of the second spar cap 66. The second spar cap 66 has a width dimension that projects from and extends from the bottom edge 48 of the web 44 to a rear edge 68 of the second spar cap 66. The width dimension of the second spar cap 66 projects from the bottom edge 48 of the web 44 at a right angle relative to the web 44. The width dimension of the second spar cap 66 could project from the bottom edge 48 of the web 44 at other angular orientations. The second spar cap 66 also has a thickness dimension between a top surface 72 of the second spar cap 66 and an opposite bottom surface 74 of the second spar cap 66.

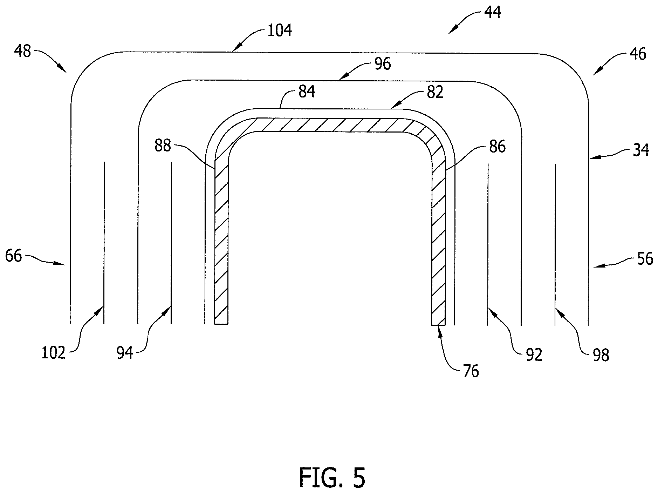

Figure 5 is a schematic representation of a cross-section of the construction of the aircraft wing spar 34 represented in Figure 4. At the center of Figure 5 is a representation of a cross-section of a layup tool or cure tool 76 employed in constructing the aircraft wing spar 34. As represented in Figure 5, the layup tool 76 has a C-channel cross-section configuration that has been rotated clockwise 90°. The configuration of the layup tool 76 represented in Figure 5 extends for an entire length of the tool. The length of the layup tool 76 corresponds to the length of the aircraft wing spar 34 to be constructed on the tool. As represented in Figure 5, a first layer 82 of composite, pre-preg fabric is laid up on the layup tool or 76. The first layer of pre-preg fabric 82 extends completely over a top surface 84 of the tool 76, over a first side surface 86 of the tool 76 and over a second side surface 88 of the tool 76. The first layer of pre-preg fabric 82 also extends along the entire length dimension of the tool 76.

A first pre-preg tape 92 is laid up on the portion of the first layer of pre-preg fabric 82 positioned on the tool first side surface 86. The first pre-preg tape 92 has a length dimension that extends the entire length dimension of the first layer of the pre-preg fabric 82 and the entire length dimension of the tool 76. The first pre-preg tape 92 is unidirectional tape with composite fibers oriented along the length dimension of the first layer of pre-preg fabric 82 and the length dimension of the tool 76.

A second pre-preg tape 94 is then laid up on the portion of the first layer of pre-preg fabric 82 that covers the second side surface 88 of the tool 76. The second pre-preg tape 94 has a length dimension that extends the entire length dimension of the first layer of pre-preg fabric and the entire length dimension of the tool 76. The second pre-preg tape 94 is unidirectional tape with composite fibers oriented along the length dimension of the first layer of pre-preg fabric 82 and the length dimension of the tool 76.

A second layer of pre-preg fabric 96 is then laid up over the first layer of pre-preg fabric 82, the first pre-preg tape 92 and the second pre-preg tape 94. The width dimension of the second layer of pre-preg fabric 96 extends completely across the first layer of pre-preg fabric 82 on the top surface 84 of the tool 76, across the first pre-preg tape 92 on the first side surface 86 of the tool 76, and across the second pre-preg tape 94 on the second side surface 88 of the tool 76. The length dimension of the second layer of pre-preg fabric 96 extends completely across the length dimension of the first layer of pre-preg fabric 82 and the length dimension of the tool 76.

An additional first pre-preg tape 98 is then laid up on the portion of the second layer of pre-preg fabric 96 that extends over the first pre-preg tape 92 positioned on the portion of the first layer of pre-preg fabric 82 that extends over the first side surface 86 of the tool 76. The additional first pre-preg tape 98 has a width dimension that is substantially the same as the width dimension as the first pre-preg tape 92. The additional first pre-preg tape 98 also has a length dimension that is substantially the same as the length dimension of the second layer of pre-preg fabric 96, the first pre-preg tape 92, the first layer of pre-preg fabric 82 and the length dimension of the tool 76. The additional first pre-preg tape 98 is unidirectional tape with composite fibers oriented along the length dimension of the second layer of pre-preg fabric 96 and the length dimension of the tool 76.

An additional second layer of pre-preg tape 102 is then laid up on the portion of the second layer of pre-preg fabric 96 that extends over the second pre-preg tape 94 positioned on the portion of the first layer of pre-preg fabric 82 that extends over the second side surface 88 of the tool 76. The additional second pre-preg tape 102 has a width dimension that is substantially the same as the width dimension of the second pre-preg tape 94. The additional second pre-preg tape 102 has a length dimension that is substantially the same as the length dimension of the second layer of pre-preg fabric 96, the second pre-preg tape 94, the first layer of pre-preg fabric 82 and the length dimension of the tool 76. The additional second pre-preg tape 102 is unidirectional tape with composite fibers oriented along the length dimension of the second layer of pre-preg fabric 96 and the length dimension of the tool 76.

A third layer of pre-preg fabric 104 is then laid up on the second layer of pre-preg fabric 96, the additional first pre-preg tape 98 and the additional second pre-preg tape 102. The third layer of pre-preg fabric 96 has a width dimension that completely covers the second layer of pre-preg fabric 96, the additional first pre-preg tape 98 and the additional second pre-preg tape 102. The third layer of pre-preg fabric 104 also has a length dimension that is substantially the same as the length dimension of the second layer of pre-preg fabric 96, the additional first pre-preg tape 98, the additional second pre-preg tape 102 and the length dimension of the tool 76.

The spar 34 is described above as being constructed of a first layer of pre-preg fabric 82, a first pre-preg tape 92, a second pre-preg tape 94, a second layer of pre-preg fabric 96, an additional first pre-preg tape 98, an additional second pre-preg tape 102 and a third layer of pre-preg fabric 104. This is only one example of the construction of the spar 34. Depending on the loads the spar 34 is to be subjected to in use of an aircraft constructed with the spar, the number of pre-preg fabric layers and pre-preg tapes could be altered depending on the loads to be subjected on the wing constructed with the spar.

Following the layups, the pre-preg fabric layers, the first pre-preg tapes and the second pre-preg tapes are vacuum bagged, positioned in an autoclave and run through a cure cycle forming the aircraft wing spar 34. The spar 34 is then cooled and trimmed, completing the construction of the spar.

With the aircraft wing spar 34 constructed as described above, the central web 44 of the spar 34 is constructed of and comprised of layers or plies of pre-preg fabric 82, 96, 104. The central web 44 is constructed of and comprised of only pre-preg fabric.

The first spar cap 56 is constructed of portions of the pre-preg fabric 82, 96, 104 of the web 44 and the first pre-preg tapes 92, 98. The first pre-preg tapes 92, 98 are unidirectional tapes with composite fibers oriented along the length dimension of the spar 34. The portions of the pre-preg fabric 82, 96, 104 of the web 44 and the first pre-preg tapes 92, 98 that make up the first spar cap 56 are interleaved with the portions of the pre-preg fabric 82, 96, 104 of the web 44 and the first pre-preg tapes 92, 98 being arranged in alternating layers.

The portions of the pre-preg fabric 82, 96, 104 of the web 44 that make up the first spar cap 56 extend through a bend at the top edge or top margin 46 of the web 44 as the portions of the pre-preg fabric extend from the web 44 to the first spar cap 56. The bend at the top edge or top margin 46 of the web 44 orients the first spar cap 56 at an angle relative to the web 44. The first pre-preg tapes 92, 98 that make up the first spar cap 56 are spaced from the bend at the top edge or top margin 46 of the web 44 at a distance of at least 0.25" away from the bend.

The second spar cap 66 is constructed of portions of the pre-preg fabric 82, 96, 104 of the web 44 and the second pre-preg tapes 94, 102. The second pre-preg tapes 94, 102 are unidirectional tapes with composite fibers oriented along the length dimension of the spar 34. The portions of the pre-preg fabric 82, 96, 104 of the web 44 and the second pre-preg tapes 94, 102 that make up the second spar cap 66 are interleaved with the portions of the pre-preg fabric 82, 96, 104 of the web 44 and the second pre-preg tapes 94, 102 being arranged in alternating layers.

The portions of the pre-preg fabric 82, 96, 104 of the web 44 that make up the second spar cap 66 extend through a bend at the bottom edge or bottom margin 48 of the web 44 as the portions of the pre-preg fabric 82, 96, 104 extend from the web 44 to the second spar cap 66. The bend at the bottom edge or bottom margin 48 of the web 44 orients the second spar cap 66 at an angle relative to the web 44. The second pre-preg tapes 94, 102 that make up the second spar cap 66 are spaced from the bend at the bottom edge or bottom margin 48 of the web 44 at a distance of at least 0.25" away from the bend.

The construction of the spar 34 described above eliminates pre-preg tapes from the web 44 and the bends at the top edge or top margin 46 of the web 44 and the bottom edge or bottom margin 48 of the web 44 that connect the web 44 with the first spar cap 56 and the second spar cap 66, respectively. This eliminates pre-preg tapes from the areas of the spar 34 were wrinkles in the tapes would form. The pre-preg fabric layers 82, 96, 104 are more easily formed over the complex surfaces of the web 44 and the bends at the top edge or top margin 46 and the bottom edge or bottom margin 48 of the web 44 without wrinkling. The unidirectional pre-preg tapes 92, 98 interleaved with the portions of the pre-preg fabric 82, 96, 104 in the first spar cap 56 and the unidirectional pre-preg tapes 94, 102 interleaved with the portions of the pre-preg fabric 82, 96, 104 in the second spar cap 66 improve the stiffness of the spar 34 in the span wise or along the length dimension of the spar, leading to a more structurally efficient design. The spar web 44 constructed entirely of pre-preg fabric 82, 96, 104 resists shear loading. The first spar cap 56 constructed as a hybrid of pre-preg fabric 82, 96, 104 and pre-preg tape 92, 98 and the second spar cap 66 constructed of a hybrid of pre-preg fabric 82, 96, 104 and pre-preg tape 94, 102 resist bending loads.

As various modifications could be made in the aircraft structure and its method of construction herein described and illustrated without departing from the scope of the invention, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. An aircraft wing spar (34) comprising:
a web (44) at a central portion of the wing spar, the web having a length that extends along a length of the wing spar, the web being comprised of only pre-preg fabric;
a first spar cap (56) on a first edge of the web, the first spar cap having a length that extends along the length of the web, the first spar cap being comprised of the pre-preg fabric of the web and pre-preg tape; and,
a second spar cap (66) on a second edge of the web, the second spar cap having a length that extends along the length of the web, the second spar cap being comprised of the pre-preg fabric of the web and pre-preg tape;
wherein the pre-preg tape is unidirectional pre-preg tape that is oriented along the length of the first spar cap and the length of the second spar cap, and
wherein the aircraft wing spar has a C-channel cross-section configuration.

2. The aircraft wing spar of claim 1, further comprising:
first portions of the pre-preg fabric of the web extend from the first edge of the web and onto the first spar cap; and,
second portions of the pre-preg fabric of the web extend from the second edge of the web and onto the second spar cap.

3. The aircraft wing spar of claim 2, further comprising:
the first portions of the pre-preg fabric of the web are interleaved with the pre-preg tape of the first spar cap; and,
the second portions of the pre-preg fabric of the web are interleaved with the pre-preg tape of the second spar cap.

4. The aircraft wing spar of claim 3, further comprising:
the first portions of the pre-preg fabric of the web are interleaved with the pre-preg tape of the first spar cap in alternating layers; and,
the second portions of the pre-preg fabric of the web are interleaved with the pre-preg tape of the second spar cap in alternating layers.

5. The aircraft wing spar of any of claims 2 to 4, further comprising:
the first portions of the pre-preg fabric of the web extend from the first edge of the web at an angle relative to the web; and,
the second portions of the pre-preg fabric of the web extend from the second edge of the web at an angle relative to the web.

6. The aircraft wing spar of any of claims 2 to 5, further comprising:
the first portions of the pre-preg fabric of the web are formed in a first bend as the first portions of the pre-preg fabric of the web extend from the first edge of the web;
the second portions of the pre-preg fabric of the web are formed in a second bend as the second portions of the pre-preg fabric of the web extend from the second edge of the web;
the pre-preg tape of the first spar cap is positioned at least 6.35 mm (0.25 inches) away from the first bend; and,
the pre-preg tape of the second spar cap is positioned at least 6.35 mm (0.25 inches) away from the second bend.

7. The aircraft wing spar of claim 4, wherein:
the outermost layer of the alternating layers of the first spar cap (56) and the outermost layer of the alternating layers of the second spar cap (66) is a layer of pre-preg fabric (104) of the web.

8. The aircraft wing spar of any of claims 2 to 6, wherein:
the spar (34) is constructed of a first layer of pre-preg fabric (82), a first pre-preg tape (92) laid up on a portion of the first layer of the pre-preg fabric (82) that extends from the first edge of the web (44) onto the first spar cap (56), a second pre-preg tape (94) laid up on a portion of the first layer of pre-preg fabric (82) that extends from the second edge of the web (44) onto the second spar cap (66), a second layer of pre-preg fabric (96) laid up over the first layer of pre-preg fabric (82), the first pre-preg tape (92) and the second pre-preg tape (94), an additional first pre-preg tape (98) laid up on a portion of the second layer of pre-preg fabric (96) that extends over the first pre-preg tape (92), an additional second pre-preg tape (102) laid up on a portion of the second layer of pre-preg fabric (96) that extends over the second pre-preg tape (94), and a third layer of pre-preg fabric (104) laid up on the second layer of pre-preg fabric (96), the additional first pre-preg tape (98) and the additional second pre-preg tape (102).

9. An aircraft wing construction (32) comprising:
a spar (34), the spar having a length dimension between a fuselage end (36) of the spar and an opposite tip end (38) of the spar, wherein the spar has a cross-section configuration of a C-channel;
the spar having a web (44) at a central portion of the spar, the web having an elongate, rectangular configuration with a height dimension between top edge of the web and an opposite bottom edge of the web, the web having a length dimension between the fuselage end of the spar and the opposite tip end of the spar, and the web having a thickness dimension between a first side surface of the web and an opposite second side surface of the web;
a first spar cap (56) on the top edge of the web, the first spar cap having an elongate, rectangular configuration, the first spar cap having a length dimension that extends along the top edge of the web between the fuselage end of the spar and the tip end of the spar, the first spar cap having a width dimension that projects from the top edge of the web, and the first spar cap having a thickness dimension between a top surface of the first spar cap and an opposite bottom surface of the first spar cap;
a second spar cap (66) on the bottom edge of the web, the second spar cap having an elongate, rectangular configuration, the second spar cap having a length dimension that extends along the bottom edge of the web between the fuselage end of the spar and the tip end of the spar, the second spar cap having a width dimension that projects from the bottom edge of the web, and the second spar cap having a thickness dimension between a top surface of the second spar cap and an opposite bottom surface of the second spar cap;
the web being constructed of only pre-preg fabric;
the first spar cap being constructed of the pre-preg fabric of the web and first pre-preg tapes;
the second spar cap being constructed of the pre-preg fabric of the web and second pre-preg tapes;
the first pre-preg tapes of the first spar cap are unidirectional pre-preg tapes with fibers oriented along the length dimension of the first spar cap; and,
the second pre-preg tapes of the second spar cap are unidirectional pre-preg tapes with fibers oriented along the length dimension of the second spar cap.

10. The aircraft wing construction of claim 9, further comprising:
first portions of the pre-preg fabric of the web extend from the top edge of the web and onto the first spar cap; and,
second portions of the pre-preg fabric of the web extend from the bottom edge of the web and across the second spar cap.

11. The aircraft wing construction of claim 10, further comprising:
the first portions of the pre-preg fabric of the web are interleaved with the first pre-preg tapes of the first spar cap; and,
the second portions of the pre-preg fabric of the web are interleaved with the second pre-preg tapes of the second spar cap,
in particular wherein:
the first portions of the pre-preg fabric of the web are interleaved with the first pre-preg tapes of the first spar cap in alternating layers; and,
the second portions of the pre-preg fabric of the web are interleaved with the second pre-preg tapes of the second spar cap in alternating layers.

12. The aircraft wing construction of claim 10 or 11, further comprising:
the first portions of the pre-preg fabric of the web extend from the top edge of the web at an angle relative to the web; and,
the second portions of the pre-preg fabric of the web extend from the bottom edge of the web at an angle relative to the web.

13. The aircraft wing construction of any of claims 10 to 12, further comprising:
the first portions of the pre-preg fabric of the web are formed in a first bend as the first portions of the pre-preg fabric of the web extend from the top edge of the web;
the second portions of the pre-preg fabric of the web are formed in a second bend as the second portions of the pre-preg fabric of the web extend from the bottom edge of the web;
the first pre-preg tapes of the first spar cap are spaced at least 6.35 mm (0.25 inches) from the first bend; and,
the second pre-preg tapes of the second spar cap are spaced at least 6.35 mm (0.25 inches) away from the second bend.

14. The aircraft wing construction of claim 11, wherein:
the outermost layer of the alternating layers of the first spar cap (56) and the outermost layer of the alternating layers of the second spar cap (66) is a layer of pre-preg fabric (104) of the web.

15. The aircraft wing construction of any of claims 9 to 13, wherein:
the spar (34) is constructed of a first layer of pre-preg fabric (82), a first pre-preg tape (92) laid up on a portion of the first layer of the pre-preg fabric (82) that extends from the top edge of the web (44) onto the first spar cap (56), a second pre-preg tape (94) laid up on a portion of the first layer of pre-preg fabric (82) that extends from the bottom edge of the web (44) onto the second spar cap (66), a second layer of pre-preg fabric (96) laid up over the first layer of pre-preg fabric (82), the first pre-preg tape (92) and the second pre-preg tape (94), an additional first pre-preg tape (98) laid up on a portion of the second layer of pre-preg fabric (96) that extends over the first pre-preg tape (92), an additional second pre-preg tape (102) laid up on a portion of the second layer of pre-preg fabric (96) that extends over the second pre-preg tape (94), and a third layer of pre-preg fabric (104) laid up on the second layer of pre-preg fabric (96), the additional first pre-preg tape (98) and the additional second pre-preg tape (102).

## Patentansprüche

1. Luftfahrzeugflügelholm (34), mit:
einem Steg (44) an einem Zentralabschnitt des Flügelholms, wobei der Steg eine Länge aufweist, die sich entlang einer Länge des Flügelholms erstreckt, wobei der Steg nur aus Prepreg-Faser zusammengesetzt ist;
einer ersten Holmabdeckung (56) auf einer ersten Kante des Stegs, wobei die erste Holmabdeckung eine Länge aufweist, die sich entlang der Länge des Holms erstreckt, wobei die erste Holmabdeckung aus Prepreg-Faser des Stegs und Prepreg-Band zusammengesetzt ist; und
einer zweiten Holmabdeckung (66) auf einer zweiten Kante des Stegs, wobei die zweite Holmabdeckung eine Länge aufweist, die sich entlang der Länge des Stegs erstreckt, wobei die zweite Holmabdeckung aus der Prepreg-Faser des Stegs und Pre-preg-Band zusammengesetzt ist;
wobei das Prepreg-Band ein unidirektionales Prepreg-Band ist, das entlang der Länge der ersten Holmabdeckung und der Länge der zweiten Holmabdeckung orientiert ist, und
wobei der Luftfahrzeugflügelholm eine C-Kanalquerschnittskonfiguration aufweist.

2. Luftfahrzeugflügelholm nach Anspruch 1, des Weiteren mit:
erste Abschnitte der Prepreg-Faser des Stegs erstrecken sich von der ersten Kante des Stegs und auf die erste Holmabdeckung; und
zweite Abschnitte der Prepreg-Faser des Stegs erstrecken sich von der zweiten Kante des Stegs und auf die zweite Holmabdeckung.

3. Luftfahrzeugflügelholm nach Anspruch 2, des Weiteren mit:
die ersten Abschnitte der Prepreg-Faser des Stegs sind mit dem Prepreg-Band der ersten Holmabdeckung verschachtelt; und
die zweiten Abschnitte der Prepreg-Faser des Stegs sind mit dem Prepreg-Band der zweiten Holmabdeckung verschachtelt.

4. Luftfahrzeugflügelholm nach Anspruch 3, des Weiteren mit:
die ersten Abschnitte der Prepreg-Faser des Stegs sind mit dem Prepreg-Band der ersten Holmabdeckung mit alternierenden Schichten verschachtelt; und
die zweiten Abschnitte der Prepreg-Faser des Stegs sind mit dem Prepreg-Band der zweiten Holmabdeckung mit alternierenden Schichten verschachtelt.

5. Luftfahrzeugflügelholm nach einem der Ansprüche 2 bis 4, des Weiteren mit:
die ersten Abschnitte der Prepreg-Faser des Stegs erstrecken sich von der ersten Kante des Stegs unter einem Winkel relativ zu dem Steg; und
die zweiten Abschnitte der Prepreg-Faser des Stegs erstrecken sich von der zweiten Kante des Stegs unter einem Winkel relativ zu dem Steg.

6. Luftfahrzeugflügelholm nach einem der Ansprüche 2 bis 5, des Weiteren mit:
die ersten Abschnitte der Prepreg-Faser des Stegs sind in einer ersten Biegung ausgebildet während die ersten Abschnitte der Prepreg-Faser des Stegs sich von der ersten Kante des Stegs erstrecken;
die zweiten Abschnitte der Prepreg-Faser des Stegs sind in einer zweiten Biegung ausgebildet während die zweiten Abschnitte der Prepreg-Faser des Stegs sich von der zweiten Kante des Stegs aus erstrecken;
das Prepreg-Band der ersten Holmabdeckung ist mindestens 6,35 mm (0,25 Zoll) weg von der ersten Biegung angeordnet;
das Prepreg-Band der zweiten Holmabdeckung ist mindestens 6,35 mm (0,25 Zoll) weg von der zweiten Biegung angeordnet.

7. Luftfahrzeugflügelholm nach Anspruch 4, wobei:
die äußerste Schicht der alternierenden Schichten der ersten Holmabdeckung (56) und die äußerste Schicht der zweiten Holmabdeckung (66) ist eine Schicht aus Prepreg-Faser (104) des Stegs.

8. Luftfahrzeugflügelholm nach einem der Ansprüche 2 bis 6, wobei:
der Holm (34) aus einer ersten Schicht von Prepreg-Faser (82), einem ersten Prepreg-Band (92), das auf einem Abschnitt der ersten Schicht der Prepreg-Faser (82) gelegt ist, die sich von der ersten Kante des Stegs (44) auf die erste Holmabdeckung (56) erstreckt, gelegt ist, einem zweiten Prepreg-Band (94), wobei ein Abschnitt der ersten Schicht der Prepreg-Faser (82), die sich von der zweiten Kante des Stegs (44) auf die zweite Holmabdeckung (66) erstreckt, gelegt ist, einer zweiten Schicht von Prepreg-Faser (96), die über die erste Schicht von Prepreg-Faser (82) gelegt ist, dem ersten Prepreg-Band (92) und dem zweiten Prepreg-Band (94), einem zusätzlichen ersten Prepreg-Band (98), das auf einen Abschnitt der zweiten Schicht der Prepreg-Faser (96) gelegt ist, die sich über das erste Prepreg-Band (92) erstreckt, einem zusätzlichen zweiten Prepreg-Band (102), das auf einen Abschnitt der zweiten Schicht der Prepreg-Faser (96) gelegt ist, die sich über das zweite Prepreg-Band (94) erstreckt, einer dritten Schicht von Prepreg-Faser (104), die auf eine zweite Schicht von Prepreg-Faser (96) gelegt ist, das zusätzliche erste Prepreg-Band (98) und das zusätzliche zweite Prepreg-Band (102) konstruiert ist.

9. Fahrzeugflügelkonstruktion (32), mit:
einem Holm (34), wobei der Holm eine Längendimension zwischen einem Rumpfende (36) des Holms und einem entgegengesetzten Spitzenende (38) des Holms aufweist, wobei der Holm eine Querschnittskonfiguration eines C-Kanals aufweist;
wobei der Holm einen Steg (44) an einem Zentralabschnitt des Holms aufweist, wobei der Steg eine längliche, rechteckige Konfiguration mit einer Höhendimension zwischen einer Oberkante des Stegs und einer entgegengesetzten Unterkante des Stegs aufweist, wobei der Steg eine Längendimension zwischen dem Rumpfende des Holms und dem entgegengesetzten Spitzenende des Holms aufweist, wobei der Steg eine Dickendimension zwischen einer ersten Seitenfläche des Stegs und der entgegengesetzten Seite des Stegs aufweist;
einer ersten Holmabdeckung (56) auf der Oberkante des Stegs, wobei die erste Holmabdeckung eine längliche, rechteckige Konfiguration aufweist, wobei die erste Holmabdeckung eine Längendimension aufweist, die sich entlang der Oberkante des Stegs zwischen dem Rumpfende des Holms und dem Spitzenende des Holms erstreckt, wobei die erste Holmabdeckung eine Breitendimension aufweist, die von der Oberkante des Stegs vorsteht, und wobei die erste Holmabdeckung eine Dickendimension zwischen einer oberen Oberfläche der ersten Holmabdeckung und einer entgegengesetzten unteren Oberfläche der ersten Holmabdeckung aufweist;
einer zweiten Holmabdeckung (66) an der Unterkante des Stegs, wobei die zweite Holmabdeckung eine längliche, rechteckige Konfiguration aufweist, wobei die zweite Holmabdeckung eine Längendimension aufweist, die sich entlang der Unterkante des Stegs zwischen dem Rumpfende des Holms und dem Spitzenende des Holms erstreckt, wobei die zweite Holmabdeckung eine Breitendimension aufweist, die von der Unterkante des Stegs vorsteht, und wobei die zweite Holmabdeckung eine Dickendimension zwischen einer oberen Oberfläche der zweiten Holmabdeckung und einer entgegengesetzten unteren Oberfläche der zweiten Holmabdeckung aufweist;
wobei der Steg nur aus Prepreg-Faser konstruiert ist;
wobei die erste Holmabdeckung aus der Prepreg-Faser des Stegs und ersten Prepreg-Bändern konstruiert ist;
wobei die zweite Holmabdeckung aus der Prepreg-Faser des Stegs und zweiten Prepreg-Bändern konstruiert ist;
wobei die ersten Prepreg-Bänder der ersten Holmabdeckung unidirektionale Prepreg-Bänder mit Fasern orientiert entlang der Längendimension der ersten Holmabdeckung sind; und
wobei die zweiten Prepreg-Bänder der zweiten Holmabdeckung unidirektionale Prepreg-Bänder mit Fasern orientiert der Längendimension der zweiten Holmabdeckung sind.

10. Luftfahrzeugflügelkonstruktion nach Anspruch 9, des Weiteren mit:
erste Abschnitte der Prepreg-Faser des Stegs erstrecken sich von der Oberkante des Stegs und auf die erste Holmabdeckung; und
zweite Abschnitte der Prepreg-Faser des Stegs erstrecken sich von der Unterkante des Stegs und über die zweite Holmabdeckung.

11. Luftfahrzeugflügelkonstruktion nach Anspruch 10, des Weiteren mit:
die ersten Abschnitte der Prepreg-Faser des Stegs sind mit den ersten Prepreg-Bändern der ersten Holmabdeckung verschachtelt; und
die zweiten Abschnitte der Prepreg-Faser des Stegs sind mit den zweiten Prepreg-Bändern der zweiten Holmabdeckung verschachtelt,
insbesondere wobei:
die ersten Abschnitte der Prepreg-Faser des Stegs mit den ersten Prepreg-Bändern der ersten Holmabdeckung in alternierenden Schichten verschachtelt sind; und
die zweiten Abschnitte der Prepreg-Faser des Stegs mit den zweiten Prepreg-Bändern der zweiten Holmabdeckung in alternierenden Schichten verschachtelt sind.

12. Luftfahrzeugflügelkonstruktion nach Anspruch 10 oder 11, des Weiteren mit:
die ersten Abschnitte der Prepreg-Faser des Stegs erstrecken sich von der Oberkante des Stegs unter einem Winkel relativ zu dem Steg; und
die zweiten Abschnitte der Prepreg-Faser des Stegs erstrecken sich von der Unterkante des Stegs unter einem Winkel relativ zu dem Steg.

13. Luftfahrzeugflügelkonstruktion nach einem der Ansprüche 10 bis 12, des Weiteren mit:
die ersten Abschnitte der Prepreg-Faser des Stegs sind in einer ersten Biegung ausgebildet während die ersten Abschnitte der Prepreg-Faser des Stegs sich von der Oberkante des Stegs aus erstrecken;
die zweiten Abschnitte der Prepreg-Faser des Stegs sind in einer zweiten Biegung ausgebildet während die zweiten Abschnitte der Prepreg-Faser des Stegs sich von der Unterkante des Stegs aus erstrecken;
die ersten Prepreg-Bänder der ersten Holmabdeckung sind mindestens 6,35 mm (0,25 Zoll) beabstandet von der ersten Biegung; und
die zweiten Prepreg-Bänder der zweiten Holmabdeckung sind mindestens 6,35 mm (0,25 Zoll) von der zweiten Biegung beabstandet.

14. Luftfahrzeugflügelkonstruktion nach Anspruch 11, wobei:
die äußerste Schicht der alternierenden Schichten der ersten Holmabdeckung (56) und die äußerste Schicht der alternierenden Schichten der zweiten Holmabdeckung (66) ist eine Schicht von Prepreg-Faser (104) des Stegs.

15. Luftfahrzeugflügelkonstruktion nach einem der Ansprüche 9 bis 13, wobei:
der Holm (34) aus einer ersten Schicht von Prepreg-Faser (82), einem ersten Prepreg-Band (92), das auf einen Abschnitt der ersten Schicht von Prepreg-Faser (82) gelegt ist, das sich von der Oberkante des Stegs (44) auf die erste Holmabdeckung (56) erstreckt, einem zweiten Prepreg-Band (94), das auf einen Abschnitt der ersten Schicht der Prepreg-Faser (82) gelegt ist, die sich von der Unterkante des Stegs (44) auf die zweite Holmabdeckung (66) erstreckt, einer zweiten Schicht von Prepreg-Faser (96), die über die erste Schicht der Prepreg-Faser (82) gelegt ist, dem ersten Prepreg-Band (92) und dem zweiten Prepreg-Band (94), einem zusätzlichen ersten Prepreg-Band (98), das auf einen Abschnitt der zweiten Schicht von Prepreg-Faser (96) gelegt ist, das sich über das erste Prepreg-Band (92) erstreckt, einem zusätzlichen zweiten Prepreg-Band (102), das über einen Abschnitt der zweiten Schicht von Prepreg-Faser (96) gelegt ist, das sich über das zweite Prepreg-Band (94) erstreckt, und einer dritten Schicht von Prepreg-Faser, die auf die zweite Schicht von Prepreg-Faser (96) gelegt ist, dem zusätzlichen ersten Prepreg-Band (98) und dem zusätzlichen zweiten Prepreg-Band (102) konstruiert ist.

## Revendications

1. Longeron (34) d'aile d'aéronef, comprenant :
une âme (44) au niveau d'une partie centrale du longeron d'aile, l'âme présentant une longueur qui s'étend selon une longueur du longeron d'aile, l'âme comprenant uniquement du tissu préimprégné ;
une première semelle (56) de longeron sur un premier bord de l'âme, la première semelle de longeron présentant une longueur qui s'étend suivant la longueur de l'âme, la première semelle de longeron comprenant le tissu préimprégné de l'âme et une bande préimprégnée ; et,
une deuxième semelle (66) de longeron sur un deuxième bord de l'âme, la deuxième semelle de longeron présentant une longueur qui s'étend suivant la longueur de l'âme, la deuxième semelle de longeron comprenant le tissu préimprégné de l'âme et une bande préimprégnée ;
la bande préimprégnée étant une bande préimprégnée unidirectionnelle qui est orientée suivant la longueur de la première semelle de longeron et la longueur de la deuxième semelle de longeron, et
le longeron d'aile d'aéronef présentant une configuration de section transversale en forme de canal en C.

2. Longeron d'aile d'aéronef selon la revendication 1, comprenant en outre :
des premières parties du tissu préimprégné de l'âme s'étendent depuis le premier bord de la bande et sur la première semelle de longeron ; et,
des deuxièmes parties du tissu préimprégné de l'âme s'étendent depuis le deuxième bord de l'âme et sur la deuxième semelle de longeron.

3. Longeron d'aile d'aéronef selon la revendication 2, comprenant en outre :
les premières parties du tissu préimprégné de l'âme sont entrelacées avec la bande préimprégnée de la première semelle de longeron ; et,
les deuxièmes parties du tissu préimprégné de l'âme sont entrelacées avec la bande préimprégnée de la deuxième semelle de longeron.

4. Longeron d'aile d'aéronef selon la revendication 3, comprenant en outre :
les premières parties du tissu préimprégné de l'âme sont entrelacées avec la bande préimprégnée de la première semelle de longeron en couches alternées ; et,
les deuxièmes parties du tissu préimprégné de l'âme sont entrelacées avec la bande préimprégnée de la deuxième semelle de longeron en couches alternées.

5. Longeron d'aile d'aéronef selon l'une quelconque des revendications 2 à 4, comprenant en outre :
les premières parties du tissu préimprégné de l'âme s'étendent depuis le premier bord de l'âme en formant un angle par rapport à l'âme ; et,
les deuxièmes parties du tissu préimprégné de l'âme s'étendent depuis le deuxième bord de l'âme en formant un angle par rapport à l'âme.

6. Longeron d'aile d'aéronef selon l'une quelconque des revendications 2 à 5, comprenant en outre :
les premières parties du tissu préimprégné de l'âme adoptent une première courbure à mesure que les premières parties du tissu préimprégné de l'âme s'étendent depuis le premier bord de l'âme ;
les deuxièmes parties du tissu préimprégné de l'âme adoptent une deuxième courbure à mesure que les deuxièmes parties du tissu préimprégné de l'âme s'étendent depuis le deuxième bord de l'âme ;
la bande préimprégnée de la première semelle de longeron est positionnée à une distance d'au moins 6,35 mm (0,25 pouce) de la première courbure ; et,
la bande préimprégnée de la deuxième semelle de longeron est positionnée à une distance d'au moins 6,35 mm (0,25 pouce) de la deuxième courbure.

7. Longeron d'aile d'aéronef selon la revendication 4, dans lequel :
la couche la plus à l'extérieur des couches alternées de la première semelle (56) de longeron et la couche la plus à l'extérieur des couches alternées de la deuxième semelle (66) de longeron sont une couche de tissu préimprégné (104) de l'âme.

8. Longeron d'aile d'aéronef selon l'une quelconque des revendications 2 à 6,
lequel longeron (34) se compose d'une première couche de tissu préimprégné (82), d'une première bande préimprégnée (92) déposée sur une partie de la première couche du tissu préimprégné (82) qui s'étend depuis le premier bord de l'âme (44) sur la première semelle (56) de longeron, d'une deuxième bande préimprégnée (94) déposée sur une partie de la première couche du tissu préimprégné (82) qui s'étend depuis le deuxième bord de l'âme (44) sur la deuxième semelle (66) de longeron, d'une deuxième couche de tissu préimprégné (96) déposée par-dessus la première couche de tissu préimprégné (82), la première bande préimprégnée (92) et la deuxième bande préimprégnée (94), d'une première bande préimprégnée supplémentaire (98) déposée sur une partie de la deuxième couche de tissu préimprégné (96) qui s'étend par-dessus la première bande préimprégnée (92), d'une deuxième bande préimprégnée supplémentaire (102) déposée sur une partie de la deuxième couche de tissu préimprégné (96) qui s'étend par-dessus la deuxième bande préimprégnée (94), et d'une troisième couche de tissu préimprégné (104) déposée sur la deuxième couche de tissu préimprégné (96), la première bande préimprégnée supplémentaire (98) et la deuxième bande préimprégnée supplémentaire (102).

9. Structure (32) d'aile d'aéronef, comprenant :
un longeron (34), le longeron présentant une dimension en longueur entre une extrémité côté fuselage (36) du longeron et une extrémité côté bout opposée (38) du longeron, le longeron présentant une configuration de section transversale en forme de canal en C ;
le longeron présentant une âme (44) au niveau d'une partie centrale du longeron, l'âme présentant une configuration rectangulaire allongée avec une dimension en hauteur entre un bord supérieur de l'âme et un bord inférieur opposé de l'âme, l'âme présentant une dimension en longueur entre l'extrémité côté fuselage du longeron et l'extrémité côté bout opposée du longeron, et l'âme présentant une dimension en épaisseur entre une première surface latérale de l'âme et une deuxième surface latérale opposée de l'âme ;
une première semelle (56) de longeron sur le bord supérieur de l'âme, la première semelle de longeron présentant une configuration rectangulaire allongée, la première semelle de longeron présentant une dimension en longueur qui s'étend suivant le bord supérieur de l'âme entre l'extrémité côté fuselage du longeron et l'extrémité côté bout du longeron, la première semelle de longeron présentant une dimension en largeur qui fait saillie depuis le bord supérieur de l'âme, et la première semelle de longeron présentant une dimension en épaisseur entre une surface supérieure de la première semelle de longeron et une surface inférieure opposée de la première semelle de longeron ;
une deuxième semelle (66) de longeron sur le bord inférieur de l'âme, la deuxième semelle de longeron présentant une configuration rectangulaire allongée, la deuxième semelle de longeron présentant une dimension en longueur qui s'étend suivant le bord inférieur de l'âme entre l'extrémité côté fuselage du longeron et l'extrémité côté bout du longeron, la deuxième semelle de longeron présentant une dimension en largeur qui fait saillie depuis le bord inférieur de l'âme, et la deuxième semelle de longeron présentant une dimension en épaisseur entre une surface supérieure de la deuxième semelle de longeron et une surface inférieure opposée de la deuxième semelle de longeron ;
l'âme étant composée uniquement de tissu préimprégné ;
la première semelle de longeron étant composée du tissu préimprégné de l'âme et de premières bandes préimprégnées ;
la deuxième semelle de longeron étant composée du tissu préimprégné de l'âme et de deuxièmes bandes préimprégnées ;
les premières bandes préimprégnées de la première semelle de longeron étant des bandes préimprégnées unidirectionnelles dotées de fibres orientées suivant la dimension en longueur de la première semelle de longeron ; et,
les deuxièmes bandes préimprégnées de la deuxième semelle de longeron étant des bandes préimprégnées unidirectionnelles dotées de fibres orientées suivant la dimension en longueur de la deuxième semelle de longeron.

10. Structure d'aile d'aéronef selon la revendication 9, comprenant en outre :
des premières parties du tissu préimprégné de l'âme s'étendent depuis le bord supérieur de l'âme et sur la première semelle de longeron ; et,
des deuxièmes parties du tissu préimprégné de l'âme s'étendent depuis le bord inférieur de l'âme et de part en part de la deuxième semelle de longeron.

11. Structure d'aile d'aéronef selon la revendication 10, comprenant en outre :
les premières parties du tissu préimprégné de l'âme sont entrelacées avec les premières bandes préimprégnées de la première semelle de longeron ; et,
les deuxièmes parties du tissu préimprégné de l'âme sont entrelacées avec les deuxièmes bandes préimprégnées de la deuxième semelle de longeron,
plus particulièrement dans laquelle :
les premières parties du tissu préimprégné de l'âme sont entrelacées avec les premières bandes préimprégnées de la première semelle de longeron en couches alternées ; et,
les deuxièmes parties du tissu préimprégné de l'âme sont entrelacées avec les deuxièmes bandes préimprégnées de la deuxième semelle de longeron en couches alternées.

12. Structure d'aile d'aéronef selon la revendication 10 ou 11, comprenant en outre :
les premières parties du tissu préimprégné de l'âme s'étendent depuis le bord supérieur de l'âme en formant un angle par rapport à l'âme ; et,
les deuxièmes parties du tissu préimprégné de l'âme s'étendent depuis le bord inférieur de l'âme en formant un angle par rapport à l'âme.

13. Structure d'aile d'aéronef selon l'une quelconque des revendications 10 à 12, comprenant en outre :
les premières parties du tissu préimprégné de l'âme adoptent une première courbure à mesure que les premières parties du tissu préimprégné de l'âme s'étendent depuis le bord supérieur de l'âme ;
les deuxièmes parties du tissu préimprégné de l'âme adoptent une deuxième courbure à mesure que les deuxièmes parties du tissu préimprégné de l'âme s'étendent depuis le bord inférieur de l'âme ;
les premières bandes préimprégnées de la première semelle de longeron sont positionnées à une distance d'au moins 6,35 mm (0,25 pouce) de la première courbure ; et,
les deuxièmes bandes préimprégnées de la deuxième semelle de longeron sont positionnées à une distance d'au moins 6,35 mm (0,25 pouce) de la deuxième courbure.

14. Structure d'aile d'aéronef selon la revendication 11, dans laquelle :
la couche la plus à l'extérieur des couches alternées de la première semelle (56) de longeron et la couche la plus à l'extérieur des couches alternées de la deuxième semelle (66) de longeron sont une couche de tissu préimprégné (104) de l'âme.

15. Structure d'aile d'aéronef selon l'une quelconque des revendications 9 à 13, dans laquelle :
le longeron (34) se compose d'une première couche de tissu préimprégné (82), d'une première bande préimprégnée (92) déposée sur une partie de la première couche du tissu préimprégné (82) qui s'étend depuis le bord supérieur de l'âme (44) sur la première semelle (56) de longeron, d'une deuxième bande préimprégnée (94) déposée sur une partie de la première couche du tissu préimprégné (82) qui s'étend depuis le bord inférieur de l'âme (44) sur la deuxième semelle (66) de longeron, d'une deuxième couche de tissu préimprégné (96) déposée par-dessus la première couche de tissu préimprégné (82), la première bande préimprégnée (92) et la deuxième bande préimprégnée (94), d'une première bande préimprégnée supplémentaire (98) déposée sur une partie de la deuxième couche de tissu préimprégné (96) qui s'étend par-dessus la première bande préimprégnée (92), d'une deuxième bande préimprégnée supplémentaire (102) déposée sur une partie de la deuxième couche de tissu préimprégné (96) qui s'étend par-dessus la deuxième bande préimprégnée (94), et d'une troisième couche de tissu préimprégné (104) déposée sur la deuxième couche de tissu préimprégné (96), la première bande préimprégnée supplémentaire (98) et la deuxième bande préimprégnée supplémentaire (102).
